# NOUVEAU FASCICULE DE BREVET EUROPEEN

(11) **EP 1 040 017 B2**
(45) Date de publication et mention de la décision concernant l'opposition: **20.08.2008**
(45) Mention de la délivrance du brevet: 07.05.2003
(21) Numéro de dépôt: 98958967.6
(22) Date de dépôt: 07.12.1998
(51) Int. Cl.: B44C 1/22, B44C 1/02, C04B 41/00

(54) **PROCEDE ET DISPOSITIF DE MARQUAGE D'OBJETS AVEC DES POUDRES MINERALES FRITTEES**
VERFAHREN UND VORRICHTUNG ZUR MARKIERUNG VON GEGENSTÄNDEN UNTER VERWENDUNG VON GESINTERTEN MINERALPULVERN
METHOD AND DEVICE FOR MARKING OBJECTS WITH SINTERED MINERAL POWDERS

(30) Priorité: 08.12.1997 FR 9715808
(43) Date de publication de la demande: 04.10.2000
(73) Titulaire: Hory, Arnaud, 87000 Limoges (FR)
(72) Inventeur: HORY, Arnaud, F-87000 Limoges (FR); GAILLARD, Jean-Marie, F-87100 Limoges (FR)
(74) Mandataire: Fantin, Laurent
(86) Numéro de dépôt international: PCT/FR1998/002644
(87) Numéro de publication internationale: WO 1999/029519

(56) Documents cités:
- EP-A- 0 504 682
- EP-A- 0 782 933
- EP-A- 1 023 184
- WO-A-95/35269
- WO-A-96/32221
- - -
- DD-A- 215 776
- DE-A- 4 439 714
- GB-A- 1 103 078
- GB-A- 1 292 174
- GB-A- 1 353 063
- GB-A- 2 169 282
- JP-A- 8 174 263
- JP-A- 9 225 658
- US-A- 5 422 146

## Description

La présente invention a pour objectif un procédé et un dispositif de marquage d'objets avec des poudres minérales.

Ce procédé permet notamment de décorer des objets de différentes formes géométriques et matières grâce au frittage de poudres minérales sur leur surface.

Un premier procédé de marquage est décrit dans la demande de brevet EP-A1-0.647.885, il permet notamment de décorer des produits en verre ou en céramique avec une composition de poudres de céramique de couleurs.

Selon ce procédé, dans un premier temps, les particules qui composent ladite composition sont appliquées sur un moyen de transfert, par exemple un papier recouvert de gomme arabique, à l'aide d'un procédé de reproduction électrophotographique.

Ensuite, le moyen de transfert recouvert de la composition est apposé sur le support en céramique ou en verre pour être cuit.

On constate que ce procédé ne peut être utilisé que pour des supports en verre ou en céramique, la température de cuisson de la composition étant élevée. Par ailleurs, ce procédé est long et peu précis en raison des nombreuses dispersions, au moment du dépôt de la composition des poudres sur les moyens de transfert et de l'application desdits moyens sur le support.

Un autre procédé de marquage est décrit dans la demande de brevet EP-A-0.432.653, il permet d'appliquer des décors en céramique sur des supports en vitrocéramique, en verre, en céramique ou analogue.

Selon ce procédé, des décors préformés en céramique sont préalablement déposés sous forme de couches sur un support. Pour les fixer, ils sont ensuite soumis à une énergie apportée par un rayon laser afin d'échauffer cette couche et la couche superficielle du support jusqu'à ramollissement ou fusion desdites couches.

Là encore, ce procédé ne peut s'appliquer que pour des supports résistants à la chaleur à laquelle ils sont directement soumis, par exemple en verre ou en céramique, en raison des températures élevées de fusion du décor en céramique. On constate également que ce procédé ne permet pas d'obtenir des traits de marquage de grande définition puisque les décors sont préformés avant d'être appliqués sur leur support.

D'autre procédés de marquage à l'aide d'un rayon laser sont connus, mais tous modifient la structure cristalline du support ou sa composition chimique. C'est le cas notamment du brevet FR-A-2.485.418 qui permet un marquage sur le verre en modifiant la perméabilité optique du verre irradié, ou du brevet EP-A1-0.741.117 qui permet de marquer de façon réversible des supports en céramique par réduction de l'oxyde présent dans la céramique dopée.

La présente invention vise à pallier ces inconvénients en proposant un marquage à l'aide de poudres minérales frittées sur un support en matériau et de forme géométrique quelconque, sans modifier la structure cristalline ou chimique dudit support, le procédé permettant un marquage résistant, rapide avec un gain important par rapport à l'art antérieur quant à la finesse du décor.

A cet effet, l'invention a pour objet un procédé de marquage d'un objet avec des poudres minérales, consistant à:
- enduire le substrat d'un revêtement constitué de poudres minérales déposé directement sur la surface à marquer du substrat,
- réaliser un marquage sur la surface enduite du substrat à l'aide d'un rayon laser, et
- retirer la partie du revêtement non irradiée à l'aide de moyens de nettoyage, caractérisé en ce que le rayon laser apporte l'énergie nécessaire pour fritter les particules minérales et pour créer un phénomène de diffusion entre les particules frittées et le substrat.

De préférence, le laser utilisé est un laser infrarouge, et la composition du revêtement est constituée d'une matrice céramique et éventuellement de pigments.

Selon un mode de réalisation, la matrice céramique est de préférence constituée d'un silico-aluminate alcalin et/ou alcalino-terreux, et/ou d'un borosilicate.

L'invention a également pour objet un dispositif pour la mise en oeuvre dudit procédé, qui comprend une table sur laquelle est disposé le substrat, un laser, des moyens de dépôt, des moyens de nettoyage, et des moyens de pilotage qui permettent de piloter le tir du rayon laser.

D'autres caractéristiques et avantages ressortiront de la description qui va suivre du procédé et du dispositif associé selon un mode de réalisation préféré, description donnée à titre d'exemple uniquement, en référence aux dessins annexés sur lesquels :
- Figures 1A, 1B, 1C montrent un synoptique du procédé,
- Figure 2 est une coupe transversale du support lors de la deuxième étape du procédé, et
- Figure 3 est un schéma de principe du dispositif associé.

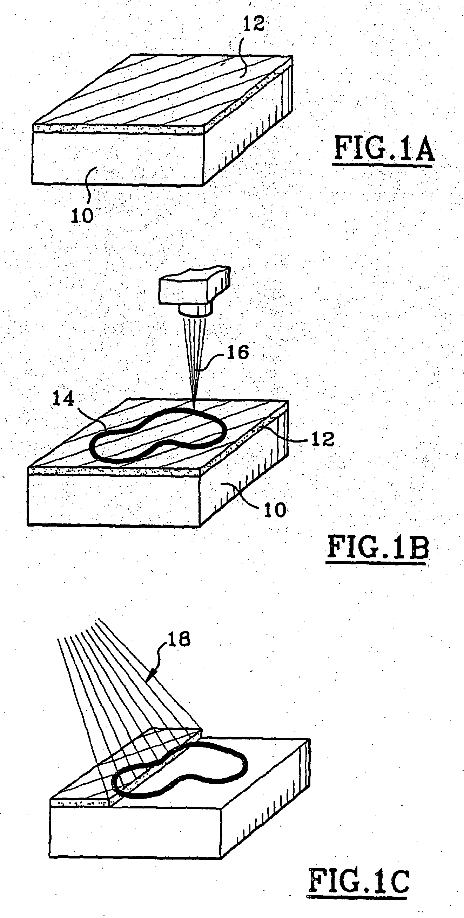

Selon l'invention, le procédé de marquage d'objets avec des poudres minérales frittées comprend les étapes qui consistent à:
1/ enduire un substrat 10 d'un revêtement 12 constitué de poudres minérales déposé directement sur la surface à marquer (figure 1A),
2/ réaliser un marquage 14 sur la surface enduite du substrat 10 à l'aide d'un rayon laser 16, ce dernier apportant suffisamment d'énergie pour fritter les particules du revêtement irradié, et pour créer un phénomène de diffusion entre les particules frittées et le substrat 10, (figure 1B),
3/ retirer la partie de revêtement non irradiée à l'aide de moyens 18 de nettoyage (figure 1C).

Ce procédé de marquage peut être utilisé sur des substrats en matériau quelconque, de type organique ou minéral, ayant pour forme géométrique une surface plane ou non.

Les différentes étapes du procédé sont maintenant décrites en détail.

Lors de la première étape, le substrat 10 est recouvert, sur toute la surface à marquer, du revêtement 12, d'épaisseur sensiblement constante, à l'aide de moyens 20 de dépôt connus de l'homme de l'art. Ce dépôt peut être notamment réalisé par sérigraphie, par enduction au rouleau ou au pinceau, par pulvérisation, ou par trempage. Le revêtement 12 doit adhérer suffisamment au substrat 10 pour permettre à l'ensemble substrat/revêtement d'être manipulé mais cette adhérence doit être limitée pour que le revêtement 12 puisse être décollé du substrat par simple lavage.

La composition du revêtement, qui est adaptée en fonction du substrat, est obtenue par l'adjonction à une matrice céramique, de pigments colorés et éventuellement d'additifs pour adapter la composition aux différents paramètres du rayon laser.

La matrice céramique est de préférence constituée d'un silico-aluminate alcalin et/ou alcalino-terreux, et/ou d'un borosilicate et les éléments chimiques de la matrice céramique peuvent être des produits naturels (feldspaths, argiles, kaolins,...) ou des produits de synthèse (oxydes).

Par ailleurs, les pigments sont choisis en fonction de leur aptitude à colorer le revêtement, et sont constitués de préférence par des oxydes colorants, ou par un mélange d'oxydes colorants et/ou de roches naturelles.

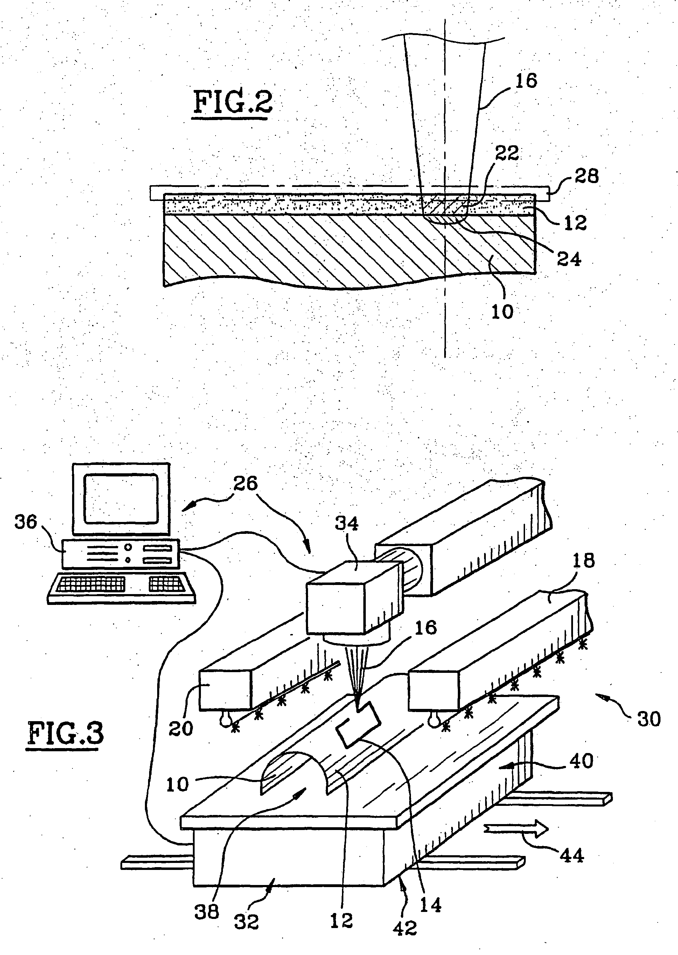

La deuxième étape, illustrée en détail par la figure 2, consiste à réaliser le marquage proprement dit à l'aide du rayon laser 16.

Grâce aux propriétés d'absorption du matériau du revêtement 12, le rayon laser 16 apporte la quantité d'énergie nécessaire au frittage des particules céramiques situées dans une zone frittée 22 du revêtement 12, et à la diffusion entre ladite zone 22 et une zone d'accrochage 24 du substrat, superficielle, située en dessous de la zone 22 frittée. Cette diffusion entre les deux zones permet de fixer solidement les particules de la zone frittée 22 sur le substrat 10 et d'obtenir un marquage résistant.

Lors de cette étape, le laser 16 est dirigé par des moyens 26 de pilotage qui permettent de déplacer le point de focalisation du rayonnement dans une zone 28 de focalisation, la surface du revêtement 12 étant placée dans la zone 28. Ces moyens 26 de pilotage, qui sont réalisés de façon connue par des miroirs et une interface informatique, permettent grâce à un logiciel de reproduire à la surface de l'objet tout décor numérisé, la zone frittée correspondant à ce décor.

Selon l'invention, le frittage est réalisé en phase solide, et la température de fusion du revêtement 12 peut être supérieure à celle du substrat 10. En effet, lors du marquage, le revêtement joue le rôle de barrière thermique en absorbant également l'énergie, la fusion étant une réaction endothermique, ainsi, le gradient de température dans le revêtement 12 est tel que la température au niveau de la jonction entre le revêtement 12 et le substrat 10 reste inférieure à la température de fusion de ce dernier.

Aussi, ce procédé peut être utilisé dans l'industrie du verre, où les températures de fusion sont faibles, et il permet d'obtenir des marquages plus résistants, susceptibles de résister notamment aux cycles de lavage par un lave-vaisselle.

D'autre part, le frittage est influencé par de nombreux facteurs, notamment par les caractéristiques propres des poudres, morphologie, dimensions, pureté, et par les conditions du traitement, température, durée.

Ainsi, en fonction des caractéristiques des poudres utilisées et de l'épaisseur du revêtement, on détermine les paramètres de tir du rayon laser 16 qui comprennent notamment la longueur d'onde du faisceau, la puissance moyenne émise, la vitesse de balayage et la fréquence de pulsation.

On peut noter que ces paramètres sont interdépendants. Pour une composition donnée, l'augmentation de puissance entraîne une augmentation de la vitesse de balayage.

Selon un mode de réalisation particulier, le laser utilisé est de type infrarouge.

Lors de la troisième étape, les parties de revêtement non irradiées sont enlevées grâce aux moyens 18 de nettoyage. Le nettoyage est notamment réalisés par un lavage au jet d'eau, par immersion dans un solvant, par essuyage mécanique, ou encore par immersion dans un liquide soumis à un flux d'ultrasons.

A titre d'exemple, pour le marquage de substrats céramiques de type faïence, grès, porcelaine, on utilise :
une matrice céramique de formule molaire :

| | |
|---|---|
| SiO₂ | de 3,0 à 3,85 |
| Al₂O₃ | de 0,3 à 0,4 |
| K₂O | de 0,25 à 0,35 |
| Na₂O | de 0,05 à 0,20 |
| CaO | de 0,45 à 0,50 |
| MgO | de 0,05 à 0,12 |
| BaO | de 0,00 à 0,10 |

et un pigment de couleur bleu de composition massique :

| | |
|---|---|
| Al₂O₃ | 54% |
| ZnO | 3% |
| CoO | 35% |
| Zircon | 8% |

la composition du revêtement étant constituée de 75% de matrice céramique et de 25% de pigment en poids.

Les paramètres de tir associés à cette composition sont répertoriés en fonction de la précision souhaitée dans le tableau suivant :

| | | |
|---|---|---|
| Longueur d'onde infrarouge | 1 µm | 10 µm |
| Puissance moyenne en W | 10 à 12 | 4 à 8 |
| Vitesse de balayage en mm/s | 40 à 80 | 150 à 250 |
| Fréquence en kHz | 30 à 50 | |
| Epaisseur du revêtement en µm après frittage | 20 à 50 | 20 à 50 |
| Précision du marquage | ± 5 µm | ± 25 µm |

On peut noter que la précision et la définition du marquage dépendent de la longueur d'onde, du diamètre du spot laser et du logiciel de pilotage.

Un schéma de principe du dispositif 30 permettant la mise en oeuvre du procédé selon l'invention est représenté sur la figure 3 lors de la deuxième étape.

On retrouve le substrat 10, recouvert du revêtement 12, disposé sur une table 32 située sous le rayon laser 16. Ce dernier est dirigé par les moyens 26 de pilotage qui permettent de réaliser le marquage 14 à partir d'une image numérisée.

Ces moyens 26 de pilotage sont constitués des moyens mécaniques 34, qui comprennent de façon connue des miroirs qui orientent le faisceau, et d'une interface informatique 36 qui commande les miroirs, afin de réaliser le décor numérisé.

La table 32, sur laquelle est fixé le substrat 10 grâce à des moyens 38 de fixation, comprend également des moyens 40 d'orientation, asservis aux moyens 26 de pilotage, afin de disposer la surface du substrat 10 toujours dans la zone de focalisation du laser 16. Avec un tel agencement, le dispositif 30 permet de réaliser des marquages sur des surfaces non planes.

En amont du rayon laser 16, on retrouve les moyens 20 de dépôt, qui permettent d'enduire le substrat 10 lors de la première étape. Selon un mode préféré, le dépôt se fait par pulvérisation.

En aval, on retrouve les moyens 18 de nettoyage, réaliser par des jets de liquide, qui permettent lors de la troisième étape d'enlever les parties de revêtement non irradiées, donc non frittées et dont les capacités d'accrochage sur le substrat sont limitées. Après cette troisième étape, il ne reste plus que les parties frittées du revêtement qui ont pour formes le décor numérisé.

La table 32 comprend également des moyens 42 de déplacement suivant la flèche 44 lors des différentes étapes. Ainsi, le substrat est placé sous les moyens 20 de dépôt lors de la première étape, sous le laser 16 lors de la deuxième étape, et sous les moyens 18 de nettoyage lors de la troisième étape.

## Revendications

1. Procédé de marquage d'un objet avec des poudres minérales, consistant à :
- enduire le substrat d'un revêtement constitué de poudres minérales **déposé directement sur la surface à marquer du substrat,**
- réaliser un marquage sur la surface enduite du substrat à l'aide d'un rayon laser, et
- retirer la partie du revêtement non irradiée à l'aide de moyens de nettoyage,
**caractérisé en ce que** le rayon laser apporte l'énergie nécessaire pour fritter les particules minérales et pour créer un phénomène de diffusion entre les particules frittées et le substrat.

2. Procédé de marquage selon la revendication 1, **caractérisé en ce que** le laser utilisé est un laser infrarouge.

3. Procédé de marquage selon l'une quelconque des revendications précédentes, **caractérisé en ce que** la composition du revêtement est constituée d'une matrice céramique.

4. Procédé de marquage selon la revendication 3, **caractérisé en ce que** la composition du revêtement comprend en plus de la matrice céramique des pigments.

5. Procédé de marquage selon la revendication 3 ou 4, **caractérisé en ce que** la matrice céramique est constituée d'un silico-aluminate alcalin et/ou alcalino-terreux et/ou d'un borosilicate.

## Claims

1. Method for marking an object with mineral powders, consisting in:
- coating the substrate with a coating consisting of mineral powders, which is deposited directly on that surface of the substrate to be marked;
- producing a mark on the coated surface of the substrate using a laser beam; and
- removing the unirradiated part of the coating using cleaning means,
**characterized in that** the laser beam delivers the energy needed to sinter the mineral particles and to create a phenomenon of diffusion between the sintered particles and the substrate.

2. Marking method according to Claim 1, **characterized in that** the laser used is an infrared laser.

3. Marking method according to either of the preceding claims, **characterized in that** the composition of the coating consists of a ceramic matrix.

4. Marking method according to Claim 3, **characterized in that** the composition of the coating includes, in addition to the ceramic matrix, pigments.

5. Marking method according to Claim 3 or 4, **characterized in that** the ceramic matrix consists of an alkali and/or alkaline-earth metal aluminosilicate and/or of a borosilicate.

## Patentansprüche

1. Verfahren zur Markierung eines Gegenstands mit mineralischen Pulvern, umfassend :
- Überziehen des Substrats mit einem aus mineralischen Pulvern bestehenden Überzug, welcher direkt auf die zu markierende Oberfläche des Substrats aufgebracht wird,
- Erzeugen einer Markierung auf der überzogenen Oberfläche des Substrats mittels eines Laserstrahls, und
- Entfernen des nicht bestrahlten Teils des Überzugs durch Mittel zur Reinigung,
**dadurch gekennzeichnet, dass** der Laserstrahl die für ein Schmelzen der mineralischen Partikel und zur Erzeugung einer Diffusion zwischen den geschmolzenen Partikeln und dem Substrat notwendige Energie aufbringt.

2. Verfahren zur Markierung nach Anspruch 1, **dadurch gekennzeichnet, dass** der verwendete Laser ein Infrarot-Laser ist.

3. Verfahren zur Markierung nach einem der vorangehenden Ansprüche, **dadurch gekennzeichnet, dass** die Zusammensetzung des Überzugs aus einer keramischen Grundmasse gebildet ist.

4. Verfahren zur Markierung nach Anspruch 3, **dadurch gekennzeichnet, dass** die Zusammensetzung des Überzugs zusätzlich zur keramischen Grundmasse Pigmente enthält.

5. Verfahren zur Markierung nach Anspruch 3 oder 4, **dadurch gekennzeichnet, dass** die keramische Grundmasse aus einem alkalischen und/oder erdalkalischen Aluminiumsilikat und/oder einem Borosilikat gebildet ist.
